# EUROPÄISCHE PATENTSCHRIFT

(11) **EP 1 743 838 B1**
(45) Veröffentlichungstag und Bekanntmachung des Hinweises auf die Patenterteilung: **30.04.2008**
(21) Anmeldenummer: 06010918.8
(22) Anmeldetag: 26.05.2006
(51) Int. Cl.: B65B 51/04, A22C 11/12

(54) **Clipspule und System zum Abwickeln einer Clipspule**
Clip coil and system for unwinding a clip coil
Bobine d'agraphes et système pour dérouler un tel enroulement

(30) Priorität: 12.07.2005 DE 102005032530
(43) Veröffentlichungstag der Anmeldung: 17.01.2007
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Fritsche, Rainer

(56) Entgegenhaltungen:
- DE-C1- 10 131 807
- US-A- 2 769 978
- US-A- 4 811 545

## Beschreibung

Die Erfindung betrifft eine Spule für einen Wickel aus einem Ausnehmungen aufweisenden Clipstrang mit einem Spulenkörper. Sie betrifft ferner ein System zum Abwickeln eines Wickels aus einem Ausnehmungen aufweisenden Clipstrang mit einer solchen Spule mit Spulenkörper und sie betrifft eine Clipmaschine mit einer Aufnahme für eine solche Spule mit Spulenkörper.

Bekannte Wickel oder Vorratswickel der genannten Art bestehen in der Regel aus einem wellenförmig geprägten, aufgewickelten Metallstrang (meist aus Aluminiumdraht), der aufgrund der Prägung jeweils an Ihren Schenkelenden einstückig zusammenhängende Clips bildet. Das aufgrund der elastischen Spannung ungewollte Abwickeln des Strangs von dem Spulenkörper, welcher den Wickel trägt, wird bekanntermaßen durch ein am in Abrollrichtung des Clipstranges freiliegenden Ende sowie den angrenzenden Windungen und/oder dem Spulenkörper befestigtes Klebeband verhindert. Dessen Entfernen vor dem Zuführen des Clipstranges zu der Clipsmaschine ist häufig mühsam und hängengebliebene Reste des Klebebands können zu Störungen der Clipmaschine führen.

Mit Clipmaschinen der genannten Art (auch als Verschließvorrichtungen oder -automaten bezeichnet) werden typischer Weise mit flüssigem bis zähpastösem oder auch (teilweise) granularem Inhalt befüllte Beutel oder schlauchförmige Verpackungen (künstliche Schlauchhülle oder Naturdarm) mittels Verschließwerkzeugen verschlossen. Dazu werden die Clips in Form des Stranges den Schließwerkzeuge entlang einer vorgegebenen Führungsbahn ausgehend von der Clipspule zugeführt (z.B. US 4 811 545). Das Bestücken der Clipmaschine mit einer solchen Spule und das Ein- und Zuführen des Clipstranges auf diesem Weg ist dabei meist sehr mühsam.

Aufgabe der Erfindung ist es, eine Spule, ein System und eine Clipmaschine der eingangs genannten Art zu schaffen, die/das einen geringerer Aufwand beim Bestücken der Clipmaschine mit einer solchen Spule und Ein- bzw. Zuführen des Clipstranges erfordert und dabei zugleich weniger störungsanfällig ist.

Die Aufgabe wird erfindungsgemäß von einer Spule mit den Merkmalen des unabhängigen Anspruches 1, von einem System mit den Merkmalen des unabhängigen Anspruches 4 und von einer Clipmaschine mit den Merkmalen des unabhängigen Anspruches 9 gelöst.

Bei einer Spule der erfindungsgemäßen Art ist an einem Spulenkörper ein Verbindungselement unverlierbar jedoch um den Spulenkörper herum drehbar angeordnet. Das Verbindungselement weist ein Führungsmittel zum Führen des Clipstranges beim Abwickeln auf. Ist der Clipstrang beispielsweise mit seinem freien Ende im Auslieferungszustand der Spule in das Führungsmittel eingeführt, ist somit sowohl die axiale als auch die radiale Lage dieses Endes des Clipstranges fixiert und genau definiert. Dadurch wird ein Bezugspunkt zum Angreifen einer Vorschubeinrichtung an dem Clipstrang geschaffen.

Lediglich die Winkelposition des Verbindungselements und somit des durch das Führungsmittel hindurchgeführten Clipstranges ist bezüglich des Spulenkörpers variabel, damit der Spulenkörper sich beim Abwickeln des Clipstranges unter dem Verbindungselement hindurch drehen kann.

Bei einem System zum Abwickeln eines aufgewickelten Clipstranges ist ferner eine Aufnahme, die eine Betriebsstellung für die Spule definiert, in der diese drehbar gelagert ist, und eine der Aufnahme zugeordnete Vorschubeinrichtung vorgesehen, die eingerichtet ist, an dem Clipstrang im Bereich des Verbindungselements anzugreifen, wenn sich die Spule in ihrer Betriebsstellung, an der Spulenaufnahme befindet.

Die Aufnahme kann zu diesem Zweck beispielsweise eine Achse oder Welle aufweisen, die die Spule in deren Betriebsstellung zumindest teilweise zentrisch durchsetzt. Die Spule wird also zum Bestücken der Clipmaschine beispielsweise auf den Stumpf einer solchen Achse aufgesteckt. Gemäß einem alternativen Ausführungsbeispiel kann die Aufnahme wenigstens zwei Führungsrollen aufweisen, die im Betriebszustand der Spule umfänglich an dieser anliegen. Bevorzugt sind es drei solcher Führungsrollen, damit die Position der Spule eindeutig bestimmt ist. Besonders bevorzugt ist die Aufnahme (also entweder die Welle oder wenigstens eine der Führungsrollen) motorisch antreibbar, damit die Spule gegebenenfalls wieder aufgewickelt werden kann.

Auf jede Weise kann die Vorschubeinrichtung durch das Verbindungselement, welches einen radialen sowie einen axialen Bezugspunkt schafft, und durch die definierte Lage der Spule in ihrer Betriebsstellung in definierter Weise an dem Clipstrang angreifen, was einen erhöhten Automatisierungsgrad ermöglicht. Lediglich auf die Winkelposition des Verbindungselements muss beim Bestücken der Aufnahme mit der Spule geachtet werden.

Bei der erfindungsgemäßen Clipmaschine mit einer entsprechenden Aufnahme und einer zugeordneten Vorschubeinrichtung führt der Einsatz der erfindungsgemäßen Spule dennoch zu einer erheblichen Arbeitserleichterung und einer erhöhten Prozesssicherheit, da beispielsweise ein etwaiges Säubern des Wickels von Resten eines Klebebandes entfällt und insbesondere das manuelle Ein- und Durchführen des freien Endes des Clipstranges auf der dafür vorgesehenen Führungsbahn in der Clipmaschine hin zu den Verschließwerkzeugen weitge-hend oder vollständig entfallen kann. In einer bevorzugten Weiterbildung der Spule weist das Verbindungselement ein an dem Clipstrang angreifendes Haltemittel zum Halten des Clipstranges oder dessen freien Endes auf. Das Haltemittel hält den Clipstrang in einer Betriebsstellung und gibt ihn in einer Freigabestellung zum Abwickeln frei. Diese Maßnahme verhindert, dass der Clipstrang aufgrund seiner elastischen Eigenschaften ungewollt aus dem Führungsmittel des Verbindungselements in tangentialer Richtung also in bzw. entgegen der Abzugsrichtung beispielsweise beim Transport der Spule oder beim Bestücken der Aufnahme mit der Spule herausgleiten kann, wenn sich das Haltemittel in der Betriebsstellung befindet.

Bei dem erfindungsgemäßen System weist die Vorschubeinrichtung in einer bevorzugten Weiterbildung ein erstes Betätigungsmittel auf, welches eingerichtet ist, eine Überführung des Haltemittels von der Betriebsstellung in die Freigabestellung zu steuern, wenn die Vorschubeinrichtung an dem Clipstrang angreift, wenn sich die Spule also in ihrer Betriebsstellung befindet. Dann nämlich erfüllt die Vorschubeinrichtung die Funktion des Haltemittels des Verbindungselements und hält den Clipstrang in einer definierten tangentialen Lage fest.

In einer vorteilhaften Ausführungsform weist das Haltemittel eine Bremse auf, die in der Betriebsstellung des Haltemittels reibschlüssig an dem Clipstrang anliegt. In einer anderen vorteilhaften Ausführungsform weist das Haltemittel einen Vorsprung auf, der in der Betriebsstellung des Haltemittels in eine Ausnehmung des Clipstranges eingreift. Dies ermöglicht eine nochmals verbesserte Lagedefinition des Clipstrangs, der nun auch hinsichtlich seiner tangentialen Lage bis auf die Teilung seiner Ausnehmungen genau definiert ist, wenn die Spule sich in ihrer Betriebsstellung an der Aufnahme befindet.

In einer weiteren vorteilhaften Weiterentwicklung des Systems weist die Vorschubeinrichtung ein Mitnahmeelement auf, dass in eine Ausnehmung des Clipstranges eingreift, wenn sich die Spule in ihrer Betriebsstellung befindet.

Dabei erweist es sich ferner als vorteilhaft, wenn das Mitnahmeelement und das erste Betätigungselement so angeordnet sind, dass das Mitnahmeelement in die Ausnehmung des Clipstrangs eingreift, während das erste Betätigungsmittel das Halteelement von der Betriebsstellung in die Freigabestellung überführt, damit kein Spiel im Moment der Übergabe des Clipstrangs von dem Haltemittel des Verbindungselements an das Mitnahmeelement der Vorschubeinrichtung auftreten kann. Wenn das Angreifen der Vorschubeinrichtung an dem Clipstrang auf diese Weise realisiert wird, wird der Clipstrang ohne Aufgabe der verbesserten Lagedefinition an die Vorschubeinrichtung übergeben. Dies ermöglicht ein weitestgehend vollständig automatisiertes und exaktes Zuführen des Clipstranges.

Bevorzugt weist der Spulenkörper der erfindungsgemäßen Spule wenigstens einen Flansch auf, an dem das Verbindungselement angeordnet ist. In einer vorteilhaften Weiterbildung der erfindungsgemäßen Spule weist das Verbindungselement eine Klemmvorrichtung mit einer Betriebsstellung und einer Freigabestellung auf, mit der es in deren Betriebsstellung an dem Flansch angreift, wobei die Klemmvorrichtung in Ihrer Freigabestellung das Verbindungselement zur Drehung um den Flansch freigibt.

Eine Spule mit einem oder zwei Flanschen ist vorteilhaft, da ein axiales Abspringen oder Abrutschen des Clipstrangs von dem Spulenkörper während des Transports oder auch während des Bestückens der Aufnahme mit der Spule verhindert werden kann. Der oder die Flansche eignen sich erfindungsgemäß aber zugleich zur drehbaren und unverlierbaren Anordnung des Verbindungselements. Die Klemmvorrichtung erlaubt dabei in vorteilhafter Weise, dass auch die Winkelstellung des Verbindungselements bzgl. des Spulenkörpers in deren Betriebsstellung festgelegt werden kann. Dies vereinfacht wiederum die Handhabung der Spule beim Bestücken der Aufnahme des erfindungsgemäßen Systems bzw. der erfindungsgemäßen Clipmaschine.

In einer vorteilhaften Weiterbildung des Systems weist die Vorschubeinrichtung ferner ein zweites Betätigungsmittel auf, welches eingerichtet ist, eine Überführung der Klemmvorrichtung von deren Betriebsstellung in deren Freigabestellung zu steuern, wenn die Vorschubeinrichtung an dem Clipstrang angreift, wenn sich die Spule also in ihrer Betriebsstellung befindet. Damit wird die Befestigung des Verbindungselements an dem Spulenkörper aufgehoben und somit der Spulenkörper zur Drehung freigegeben, sobald die Spule in ihre definierten Betriebsstellung gebracht und damit der Clipstrang von dem Haltemittel an die Vorschubeinrichtung "übergeben" wurde.

In alternativen Ausführungsformen ist nicht das Verbindungselement um den Flansch der Spule, sondern der Flansch selbst um einen Spulenkern des Spulenkörpers drehbar gelagert. Weiterhin ist es möglich, an dem Spulenkörper ein Träger, wie beispielsweise einen Auslegerarm oder dergleichen, vorzusehen, an dem das Verbindungselement befestigt ist.

Die Unverlierbarkeit des Verbindungselements wird vorzugsweise dadurch sichergestellt, dass der Flansch einen Greifrand und das Verbindungselement ein komplementäres Greifprofil aufweisen. Dies kann beispielsweise in Form eines Profils am äußeren Rand des Clipspulenflansches mit einer Hinterschneidung, einer Wulst, einer umlaufenden Nut oder dergleichen, und einer komplementären Hinterschneidung in dem diesen Rand umgreifenden Profil des Verbindungselements vorgesehen sein.

Bei dem erfindungsgemäßen System erweist es sich weiterhin als vorteilhaft, dass die Vorschubeinrichtung einen mit der Antriebsrolle oder dem Mitnahmeelement verbundenen Motor und eine mit dem Motor gekoppelte Vorschubsteuerung aufweist, die eingerichtet sind, den Clipstrang von der Spule abzuziehen, wenn sich die Spule in ihrer Betriebsstellung befindet. Hierdurch wird der angesprochene hohe Automatisierungsgrad verwirklicht, der den zeitaufwendigen Clipspulenwechsel bis auf das Einsetzen einer neuen Clipspule in die Aufnahme reduziert. Das manuelle Betätigen der Clipspule bzw. Abziehen des Clipstrangs von der Clipspule zum Zweck des Einfädeins kann somit nämlich entfallen.

Eine erfindungsgemäße Clipmaschine mit einer Aufnahme und einer Vorschubeinrichtung, wie hierin zuvor beschreiben, weist bevorzugt ferner eine Clipmaschinensteuerung auf, die mit der Vorschubsteuerung verbunden ist und eingerichtet ist, ein Clipvorschub-Steuersignal an die Vorschubeinrichtung auszugeben, wobei die Vorschubeinrichtung eingerichtet ist, bei Erhalt des Clipvorschub-Steuersignals den Motor der Vorschubeinrichtung (intermittierend oder kontinuierlich) in Abzugsrichtung des Clipstranges anzutreiben. Es kann sich bei dem Motor der Vorschubeinrichtung um einen Schrittmotor oder einen elektrischen Gleich- oder Wechselstrommotor anderer Art handeln.

Besonders bevorzugt ist die Clipmaschinensteuerung mit der Vorschubsteuerung verbunden und eingerichtet, ein Produktionsende-Steuersignal an die Vorschubsteuerung auszugeben, welche ihrerseits eingerichtet ist, bei Erhalt des Produktionsende-Steuersignals den Motor der Vorschubeinrichtung um eine vorbestimmte Umdrehungsanzahl entgegen der Abzugsrichtung des Clipstrangs anzutreiben, welche Umdrehungsanzahl in etwa der Länge des ausgefahrenen Clipstrangs von dem Verbindungselement bis zu dem Verschließwerkzeug der Clipmaschine entspricht.

Umgekehrt ist die Clipmaschinensteuerung bevorzugt eingerichtet, ein Produktionsstart-Steuersignal an die Vorschubsteuerung auszugeben, welche Ihrerseits eingerichtet ist, den Motor der Vorschubeinrichtung bei Erhalt des Produktionsstart-Steuersignals um die vorbestimmte Umdrehungsanzahl in Abzugsrichtung des Clipstrangs anzutreiben, welche Umdrehungsanzahl in etwa der Länge des ausgefahrenen Clipstrangs von dem Verbindungselement bis zu dem Verschließwerkzeug in der Clipmaschine entspricht. Die Ansteuerung bzw. Steuerung des Motors der Vorschubeinrichtung erfolgt dabei vorzugsweise zusätzlich unter der Maßgabe, dass sich die Spule in ihrer Betriebsstellung befindet, welche Bedingung durch eine sensorische Abfrage und entsprechende Signalisierung an die Vorschubsteuerung verifiziert werden kann.

Ferner weist die Vorschubsteuerung bevorzugt eine Clipende-Überwachungseinrichtung auf, die eingerichtet ist, ein Maschinenstopp-Steuersignal zu erzeugen und an die Clipmaschinensteuerung auszugeben, wenn ein letzter Clip des aufgewickelten Clipstranges die Vorschubeinrichtung durchläuft. Die Clipende-Überwachungseinrichtung kann, je nachdem ob die Vorschubeinrichtung im normalen Clipbetrieb angetrieben wird oder nicht, unterschiedlich ausgeführt sein. Wenn die Vorschubeinrichtung im normalen Clipbetrieb kontinuierlich angetrieben wird und den Clipstrang beim Abzug unterstützend antreibt, wobei dieser aber zwangsläufig im Takt des Verschließvorgangs abgenommen und den Verschließwerkzeugen zugeführt wird, kann das Clipende festgestellt werden, sobald der Antrieb der Vorschubeinrichtung ins Leere läuft, ihm also nahezu kein Drehmomentbedarf mehr abverlangt wird. Wird die Vorschubeinrichtung im normalen Clipbetrieb hingegen nicht angetrieben (während sie zum Zweck des Einführens und Zurückziehens des Clipstrangs dennoch antreibbar ist) und läuft, angetrieben durch den anderweitig abgezogenen Clipstrang, nur passiv mit, wird das Clipende festgestellt, sobald die Vorschubeinrichtung stehen bleibt nachdem der letzte Clip diese passiert hat.

Weitere Merkmale und Vorteile der erfindungsgemäßen Spule, des erfindungsgemäßen Systems sowie der erfindungsgemäßen Clipmaschine ergeben sich aus den Unteransprüchen.
- Figur 1: eine schematisierte Darstellung eines Ausführungsbeispiels der erfindungsgemäßen Clipmaschine;
- Figur 2: eine perspektivische Darstellung eines Ausführungsbeispiels eines erfindungsgemäßen Systems bestehend aus einer Spule, einer Aufnahme für die Spule und eine Vorschubseinrichtung;
- Figur 3: ein zweites Ausführungsbeispiel des erfindungsgemäßen Systems mit einer anderen Spulenaufnahme;
- Figur 4: eine Detailansicht des ersten Ausführungsbeispiels des erfindungsgemäßen Systems im Betriebszustand;
- Figur 5: eine perspektivische Darstellung eines Ausführungsbeispiels des Verbindungselements; und

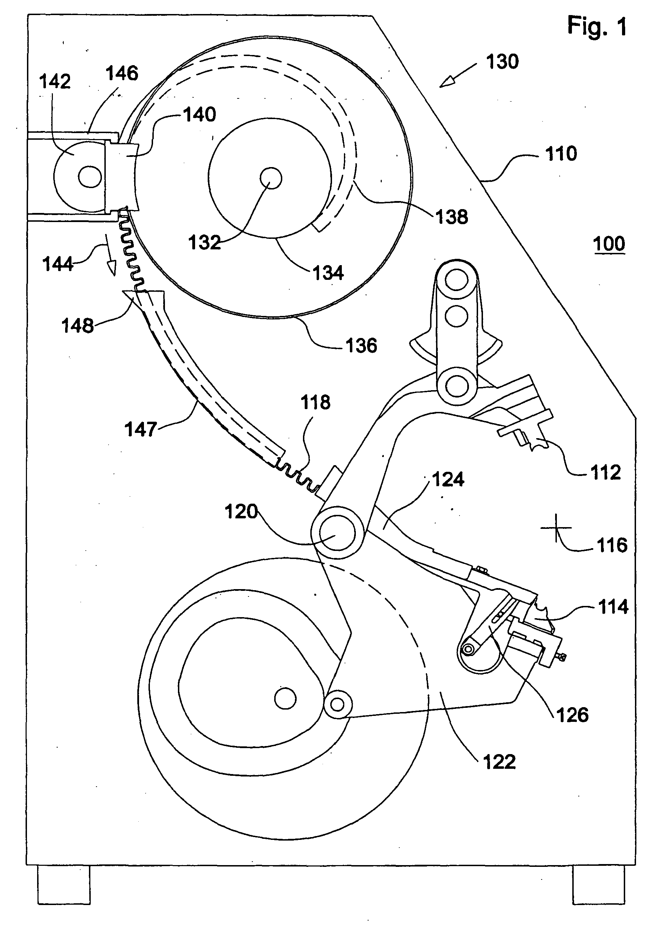

Die erfindungsgemäße Clipmaschine 100 ist in Fig. 1 auf ihre erfindungswesentlichen Elemente reduziert dargestellt. Im Inneren ihres Gehäuses 110 weist die Clipmaschine zwei relativ zueinander bewegliche Clipwerkzeuge 112 und 114 auf. Diese bewegen sich auf ein gemeinsames Zentrum 116 zu, welches typischerweise von der Schlauchachse eines zu verschließenden Verpackungsmaterials definiert wird. Das um einen zuvor von nicht dargestellten Verdrängerelementen der Clipmaschine 100 durch Einschnüren gebildeten Schlauchzopf zu verschließende Verschlusselement (Clip) wird dem unteren Verschließwerkzeug 114 als wellenförmiger, quasi endloser Clipstrang 118 zugeführt. Das untere Verschließwerkzeug 114 ist zum Zweck der Zuführung des Clipstrangs daher an einem um eine Schwenkachse 120 angelegten Hebelarm 122 befestigt, der eine Führung 124 aufweist, die nahe der Schwenkachse 120 beginnt. Die Führung 124 mündet in dem Verschließwerkzeug 114 welches in dem dargestellten Fall eine Matrize ist. Das korrespondiere obere Verschließwerkzeug 112 ist ein Stempel. Die Verschließwerkzeuge erfüllen beim Aufeinanderzubewegen zwei Funktionen: zuerst wird der vorderste Clip von dem nachfolgenden Clipstrang 118 abgetrennt und danach um den Schlauchzopf herum verformt bis dieser fest verschlossen ist.

An dem unteren Cliphebel 122 ist im Bereich des vorderen Endes der Führungsbahn 124 ein intermittierend eingreifender Fördermechanismus 126 angeordnet, der mittels eines Fingers an dem Clipstrang angreift, diesen anhebt, vorschiebt und auf diese Weise synchronisiert mit dem Verschließvorgang den jeweils vordersten Clip in die Matrize 114 einlegt.

In dem Maschinengehäuse 110 ist ein erfindungsgemäßes Clipzuführungssystem 130 angeordnet. Dieses umfasst eine auf einer Achse 132 angeordnete Aufnahme 134 für eine erfindungsgemäße Spule 136. Die Spule 136 trägt einen Vorratswickel 138 des in der Clipmaschine 100 verarbeiteten Clipstrangs.

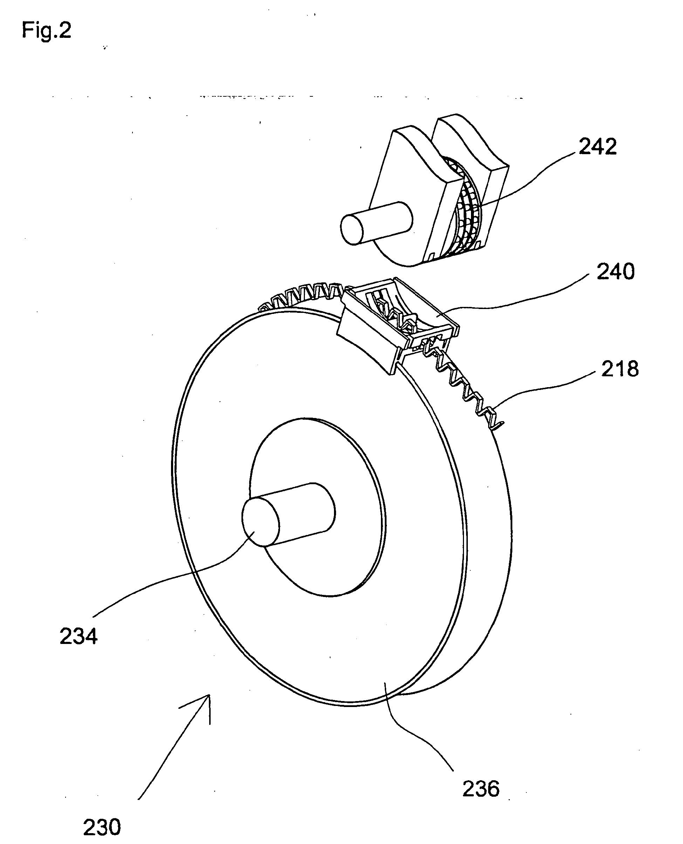

Am Außenumfang weist die Clipspule 136 ein unverlierbar mit dem Spulenkörper verbundenes und um diesen drehbar angeordnetes Verbindungselement 140 auf. Durch dieses Verbindungselement 140 ist der Clipstrang 118 hindurchgeführt, wie im Zusammenhang mit den Figuren 2 bis 5 näher erläutert werden wird. Im Bereich des Verbindungselements 140 greift eine Vorschubeinrichtung, genauer ein Rotationskörper 142 der Vorschubeinrichtung mit mehreren Mitnahmeelementen, an dem Clipstrang an. Durch Drehung des Rotationskörpers 142 - in der Darstellung gemäß Fig. 1 im Uhrzeigersinn - wird der Clipstrang 118 somit in Auszugsrichtung, gekennzeichnet durch den Pfeil 144, in Richtung des unteren Verschließwerkzeugs 114 gefördert. Auf dem Weg zu der an dem unteren Verschließhebel 122 befindlichen Führung 124 wird der Clipstrang ferner durch eine zweite Führung 147 geleitet und somit auf einer über den im Wesentlichen gesamten Weg von dem Verbindungselement 140 zu dem Verschließwerkzeug 114 definierten Bahn geführt.

Durch die erfindungsgemäße Steuerung der Vorschubeinrichtung, wird der Rotationskörper 142 mittels eines nicht dargestellten Motors der Vorschubeinrichtung um eine bestimmte Anzahl Umdrehungen im Uhrzeigersinn gedreht und dabei der Clipstranges von der Clipspule 136 abgewickelt. Die Umdrehungsanzahl ist bestimmt, durch den Abstand von dem Verbindungselement 140 bis hin zum unteren Verschließwerkzeug 114 entlang der definierten Bahn von dem Verbindungselement 140 zu dem Verschließwerkzeug 114..

Um den Clipstrangs bis zum unteren Verschließwerkzeug 114 möglichst genau abwickeln zu können, muss zunächst die Lage des Clipstrangs bzw. die dessen freien Endes bezüglich der Vorschubeinrichtung 142 bekannt sein. Dies wird durch das Verbindungselement 140 ermöglicht, wenn dieses erfindungsgemäß ein Haltemittel aufweist, das an einer vorbestimmten Stelle des Clipstrangs angreift. Vorzugsweise weist das Haltemittel dafür einen Vorsprung auf, der in eine Ausnehmung des Clipstrangs eingreift, die vom vorderen freien Ende desselben um eine abgezählte Anzahl von Ausnehmungen oder einen vorbestimmten Abstand entfernt ist, wie nachfolgend anhand der Figuren 2 bis 5 beschrieben werden wird.

Die somit bis auf einen einzelnen Clip genaue Bestimmung der Position des freien Endes des Clipstrangs und die genaue Kenntnis von der Länge der Bahn von dem Verbindungselement 140 zu dem Verschließwerkzeug 114 ermöglichen, dass beispielsweise nach einem Wechsel der Clipspule ein zu Beginn eines neuen Produktionszyklus neuer Clipstrang dem Verschließwerkzeug 114 vollständig automatisch zugeführt werden kann. Auch das Einfädeln kann mittels einer trichterförmigen Einführhilfe 148 an der zweiten Führung 147 ohne manuellen Eingriff erfolgen.

In umgekehrter Richtung kann das Rotationselement 142 der Vorschubeinrichtung durch den Antriebsmotor angetrieben werden, um den Clipstrang 118 aus der Clipmaschine heraus zurückzuziehen, bis das vordere freie Ende des Clipstrangs bis auf dieselbe vorbestimmten Länge in das Verbindungselement 140 zurückgezogen ist. Dies geschieht erfindungsgemäß nach Erhalt eines entsprechenden Produktionsende-Signals, welches von einer nicht dargestellten Clipmaschinensteuerung an die Steuerung der Vorschubeinrichtung 142 ausgegeben wird. Sodann kann die Clipspule 136 mit dem restlichen darauf befindlichen Clipvorrat 138 abgenommen und beispielsweise gegen eine neue Clipspule 136 mit einem Clip anderer Größe ausgetauscht und ein neuer Produktionszyklus gestartet werden.

Zum Zurückziehen des Clipstrangs 118 aus der Clipmaschine 100 ist es ferner notwendig, auch die Spule 136 aktiv zu drehen damit sich der zurückgezogene Clipstrang auf dieser wieder aufwickeln kann. Dies geschieht vorzugsweise durch einen motorischen Antrieb der Aufnahme 134. Dieser Antrieb kann synchronisiert oder mit (einstellbarem) Schlupf erfolgen.

Während die Vorschubeinrichtung zum Zweck des Einführens und Zurückziehens des Clipstrangs 118 nach bzw. vor dem Bestücken der Clipmaschine mit einer Spule 136 in der oben beschriebenen Weise antreibbar ist, kann sie im normalen Clipbetrieb entweder aktiv angetrieben werden oder nur passiv mitlaufen, während der Vorschub allein durch den Fördermechanismus 126 geleistet wird. Wird sie nicht angetrieben kann sie als Clipzähler dienen und/oder als Teil einer Clipende-Überwachungseinrichtung das Clipstrangende feststellen, indem ihr Stehenbleiben nach dem Passieren des letzten Clips registriert wird.

Wird sie auch im normalen Clipbetrieb angetrieben so kann dies kontinuierlich oder intermittierend erfolgen. Ein kontinuierlicher Antrieb wirkt beim Abzug des Clipstrangs nur unterstützend, da dieser zwangsläufig im Takt des Verschließvorgangs durch den Fördermechanismus 126 abgenommen und den Verschließwerkzeugen zugeführt werden muss. In diesem Fall kann das Clipstrangende mittels der Vorschubsteuerung festgestellt werden, sobald der Antrieb der Vorschubeinrichtung ins Leere läuft, weil ihm der geführte und von dem Finger des Fördermechanismus 126 gehaltene Clipstrang keinen Widerstand mehr entgegensetzt, also kein Drehmomentbedarf mehr vorliegt. Ein intermittierender Antrieb der Vorschubeinrichtung im Takt des Clipvorgangs kann mittels der Vorschubsteuerung voll synchronisiert gemeinsam mit dem Fördermechanismus 126 Vorschub leisten oder den Fördermechanismus 126 teilweise ersetzen. In letzterem Fall erfolgt allein das Anheben des Clipstranges 118 vor der Matrize 114 zum Zweck des Einlegens des vorderen Clips in die Matrize 114 synchronisiert. Das Clipstrangende kann in diesem Fall anderweitig (z.B. optisch mittels Lichtschranke oder dgl.) erfasst werden.

Mit der Information des Clipstrangendes und der Kenntnis über die Länge der Bahn von dem Verbindungselement 140 zu dem Verschließwerkzeug 114 bzw. die Anzahl der restlichen Clips kann die Vorschubsteuerung ein Maschinenstopp-Steuersignal erzeugen und an die Clipmaschinensteuerung auszugeben, welche dann nach einer der Anzahl restlicher Clips entsprechenden Taktzahl die Clipmaschine anhält und beispielsweise das Vorratsende an das Bedienpersonal signalisiert.

Um das Einlegen der Clipspule 136 zu vereinfachen und das Verbindungselement 140 bezüglich seiner Winkelposition auf die Vorschubeinrichtung, bzw. in dem dargestellten Fall auf das Rotationselement 142, auszurichten, weist das Clipzuführungssystem 130 einen Einbauschacht mit einer Tasche 146 im Bereich der Vorschubeinrichtung auf, deren Kontur zumindest abschnittsweise komplementär zu der des Verbindungselementes ist. Die Tasche 146 ist bezüglich des Maschinengehäuses 110 und somit bezüglich der Führung 147, der Aufnahme 134 und der Vorschubeinrichtung fest angeordnet. Sie ist so bemessen, dass das Verbindungselement 140 mit den nötigen (Pass-) Genauigkeit nach dem Einlegen der Spule auf das Rotationselement 142 ausgerichtet ist. Sie hintergreift das Verbindungselement 140 ferner an einem Rand, so dass beim Eingreifen des Rotationselements 142 in das Verbindungselement 140 eine radial nach innen wirkende Kraft nicht über die Spule 136 sondern über die Tasche 146 auf das Maschinengehäuse 110 abgeleitet wird.

In Figur 2 ist das erfindungsgemäße System (Clipzuführungssystem) zum Abwickeln eines aufgewickelten Clipstrangs in einer perspektivischen Ansicht gezeigt. Das System 230 umfasst die Aufnahme, welche in diesem Ausführungsbeispiel als Achs- bzw. Wellenstumpf 234 ausgebildet ist, je nachdem ob er angetrieben ist oder nicht. Dieser Achs- bzw. Wellenstumpf 234 durchsetzt die Spule 236 zentrisch und definiert somit die radiale Position des umfänglich am äußeren Spulenrand angeordneten Verbindungselements 240. Ferner kann die axiale Position der Spule in ihrer Betriebsstellung dadurch definiert werden, dass vorzugsweise der Achs- bzw. Wellenstumpf oder die Aufnahme an anderer Stelle einen Anschlag für den Spulenkörper 236 aufweist. Alternativ kann der Achs- bzw. Wellenstumpf konisch ausgeformt sein, so dass eine entsprechend ebenfalls konisch ausgeführte Aufnahmebohrung in dem Spulenkörper 236 die axiale Endstellung vorgibt. In dieser axialen Endstellung ist das Verbindungselement 240 so angeordnet, dass eine der Aufnahme 234 zugeordnete Vorschubeinrichtung 242 genau an der Stelle des Verbindungselements 240 an dem Clipstrang 218 angreifen kann. Die räumliche Zuordnung zwischen der Aufnahme 234 und der Vorschubeinrichtung 242 erfolgt über den in Fig. 1 gezeigten einen Einbauschacht mit Tasche oder ein anderes Konstruktionselement, wie z.B. einen gemeinsamen Rahmen des Clipzuführungssystems, das an die Abmessung der Spule mit Verbindungselement angepasst ist.

Die Vorschubeinrichtung 242, bzw. genauer gesagt der Rotationskörper derselben, ist in Figur 2 beabstandet zu dem Verbindungselement 240 und somit zu dem durch das Verbindungselement 240 hindurchgeführten Clipstrang 218 dargestellt. Diese Situation wird vorgefunden, während die Clipspule 236 auf die Aufnahme 234 gesteckt wird. Hat die Clipspule ihre Betriebsstellung eingenommen, wird die Vorschubeinrichtung bzw. der Rotationskörper 242 in seine Betriebsstellung an dem Clipstrang 218 gefahren, d.h. teilweise in das Verbindungselement 214 hinein. Die manuel oder bevorzugt automatisch gesteuert geschehen. In letzterem Fall weist die Vorschubsteuerung beispielsweise einen Positionssensor zur Erfassung der Betriebsstellung der Spule und einen Antrieb für das laterale Verfahren des Rotationskörpers auf.

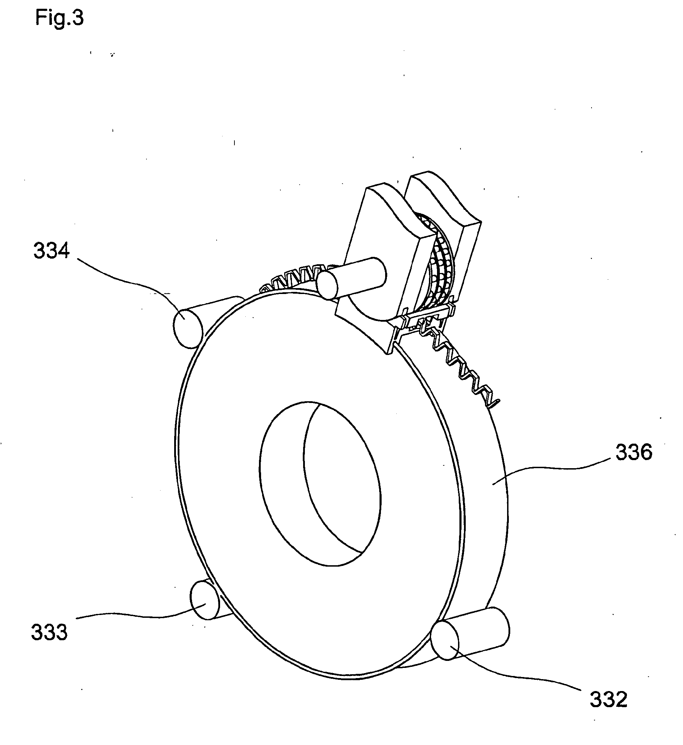

In Figur 3 ist eine andere Ausführungsform der Aufnahme des erfindungsgemäßen Clipzuführungs- bzw. Clipabwickelsystem gezeigt. Hiernach besteht die Aufnahme aus drei Führungsrollen 332, 333, 334, die im Betriebszustand der Clipspule 336 an deren Umfang anliegen und somit deren radiale Position eindeutig bestimmen. Wiederum kann die axiale Position der Clipspule 336 in deren Betriebszustand durch einen nicht dargestellten Anschlag definiert werden. Eine zwei oder alle drei Führungsrollen können aktiv, d.h. motorisch angetrieben sein.

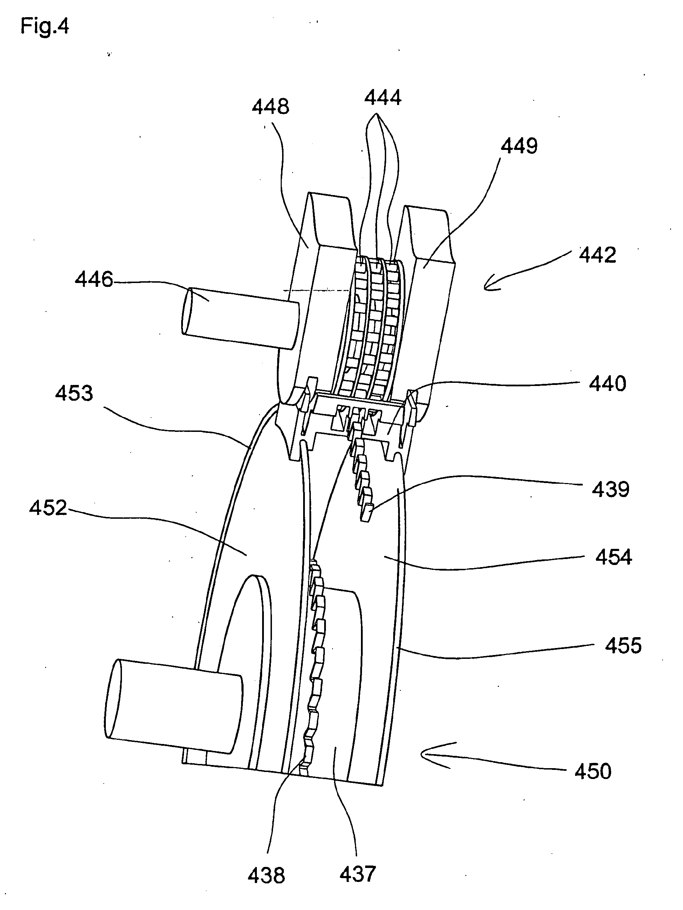

Figur 4 zeigt eine Detailansicht des in das Verbindungselement 440 hineingefahrenen Rotationskörpers 442 sowie eine detailliertere Darstellung des Spulenkörpers 450. Der Spulenkörper 450 weist zwei seitlich begrenzende Flansche 452, 454 auf. Zwischen diesen Flanschen ist auf einem Spulenkern 437 der Wickel des Clipstrangs 438 aufgewickelt. Exemplarisch ist nur eine Windung in Figur 4 gezeigt, deren freies Ende 439 durch das Verbindungselement 440 hindurch gefädelt ist. Die Flansche 452 und 455 weisen an ihrem umfänglich äußeren Rand jeweils eine Wulst oder einen Greifrand 453 bzw. 455 auf, der ein komplementäres Greifprofil in dem Verbindungselement durchsetzt. Hierdurch ist das Verbindungselement gegen Verlieren gesichert, d.h. in jeder Winkelposition unverlierbar mit dem Spulenkörper verbunden.

Der Rotationskörper 442 weist umfänglich drei parallele Reihen mehrerer Mitnahmeelemente 444 auf, die jeweils eine unterschiedliche Teilung haben. Dies ermöglicht einen Einsatz des Rotationskörpers 442 und somit der Vorschubeinrichtung für drei verschiedene Clipstränge mit entsprechend unterschiedlichen Teilungen. Dies ist insbesondere dort von großer Bedeutung, wo dieselbe Clipmaschine für unterschiedliche Wurstprodukte und/oder Verpackungsmaterialien (Schlauchhüllen, Därme, Beutel oder dgl.) mit unterschiedlichem Kaliber und unterschiedlicher Beschaffenheit eingesetzt wird, die wiederum unterschiedliche Verschlussklammergrößen erfordern. Anstelle der gezeigten Mitnahmeelemente in Form sich in axialer Richtung erstreckender Stifte können diese beispielsweise auch als Zähne an einem Zahnrad ausgebildet sein.

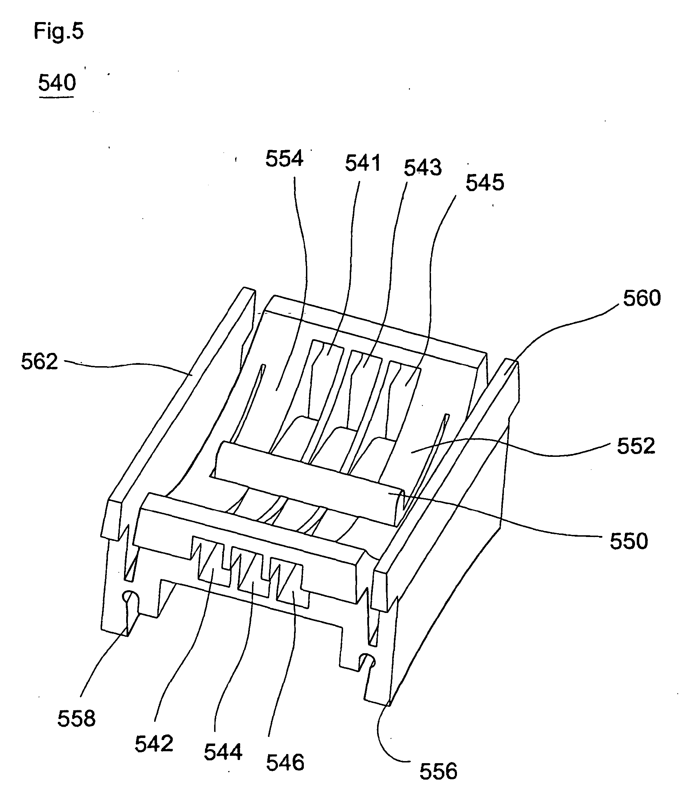

Der Rotationskörper 442 ist über einen Wellenstumpf 446 mit einem nicht dargestellten Antriebsmotor der Vorschubeinrichtung verbunden. An den axialen Rändern des Rotationskörpers 442 weist dieser jeweils eine Leiste 448, 449 auf, die zusammen als erstes Betätigungselement dienen und ein Haltemittel des Verbindungselements aus dessen Betriebsstellung in dessen Freigabestellung in der unter Bezugnahme auf Figur 5 erläuterten Weise überführen.

In Figur 5 ist ein Ausführungsbeispiel des Verbindungselement 540 in einer anderen perspektivischen Darstellung gezeigt. Das Verbindungselement 540 weist jeweils eingangs und ausgangs drei Öffnungen oder Fenster 541, 542 bzw. 543, 544 und 545, 546 auf. Diese Fenster dienen als Führungsmittel und weisen einen Querschnitt auf, der jeweils an das Querschnittsprofil eines zugeordneten Clipstrangs angepasst ist.

Wird das Verbindungselement 540 in der in Figur 4 gezeigten Weise auf den Spulenkörper aufgesetzt, kann der auf den Spulenkörper aufgewickelte Clipstrang mit seinem freien Ende durch die paarweise gegenüberliegenden Fenster mit entsprechender Größe hindurchgefädelt werden. Dies ist typischerweise der Auslieferungszustand der erfindungsgemäßen Spule, wobei die Anzahl der aus dem Verbindungselement herausragenden Clips am freien Ende des Clipstranges bevorzugt festgelegt ist.

Befindet sich die Spule nicht in ihrer Betriebsstellung auf bzw. an der Aufnahme, wie beispielsweise in den vorangehend beschriebenen Figuren dargestellt, greift ein Haltemittel 550 in eine Ausnehmung des wellenförmigen Clipstrangs ein. Das Haltemittel 550 ist in dem Ausführungsbeispiel gemäß Figur 5 als Steg ausgebildet, welcher als Vorsprung in die durch die Fenster 541 bis 546 definierte Führungsbahn für den Clipsstrang innerhalb des Verbindungselements 540 hineinragt.

Das Verbindungselement 540 ist vorzugsweise ein Spritzgussteil, bei dem das Haltemittel über jeweils eine Lasche 552 und 554 an seinen beiden Enden einstückig zusammenhängend mit dem übrigen Verbindungselement verbunden ist. Die Laschen 552 und 554 bewirken, dass das Haltemittel 550 federnd in dem Verbindungselement aufgehängt ist. Gegen die von der Eigenstabilität des Materials des Verbindungselements aufgebrachte Federkraft kann das Haltemittel 550 aus seiner dargestellten Betriebsstellung in eine Freigabestellung gebracht werden. Dies geschieht indem der Steg aus der Führungsbahn für den Clipstrang nach unten gedrückt wird.

Hierfür sorgen im Fall eines Abwickel- bzw. Zuführsystems gemäß der Ausführungsform aus Fig. 4 die beiden Leisten 448 und 449 des Rotationskörpers 442 als erstes Betätigungsmittel, wenn der Rotationskörpers 442 in seine in Figur 4 dargestellte Betriebsstellung verfahren wird und somit in das Verbindungselement 440 bzw. 540 eingreift. Gleichzeitig übernehmen die Mitnahmeelemente 444 die Haltefunktion für den Clipstrang, so dass dieser zu keiner Zeit unkontrolliert aus dem Verbindungselement 540 herausgleiten kann und seine tangentiale Lage bezüglich der Clipspule unverändert beibehält. Anstelle der mechanischen Überführung des Halteelements von seiner in Figur 5 gezeigten Betriebsstellung in die Freigabestellung kann auch vorgesehen sein, dass die Position des Betätigungselements, welches nicht notwendigerweise in Form der in Figur 4 gezeigten Leisten 448 und 449 ausgestaltet sein muss, sensorisch erfasst und das Haltemittel motorisch oder anderweitig angetrieben von der Betriebsstellung in die Freigabestellung bewegt werden.

Ebenfalls bedingt durch elastische Materialeigenschaften sind an dem Verbindungselement 450 zwei seitliche Klemmbacken 556 und 558 ausgebildet, welche in dem in Figur 4 gezeigten Zusammenbau mit dem Spulenkörper 450 seitlich gegen die jeweils zugeordneten Flansche 452 und 454 drücken und somit das Verbindungselement in angularer Richtung fixieren. Diese Fixierung wird wiederum mittels jeweils eines an der Vorschubeinrichtung vorgesehenen zweiten Betätigungsmittels im Bereich der Leisten 448 bzw. 449 aufgehoben, indem dieses zweite Betätigungsmittel von außen seitlich gegen die oberen Wangen 560, 562 einwärts drückt und somit die Klemmbacken 556 und 558 löst. Als zweites Betätigungsmittel weisen die Leisten 448 und 449 in axialer Verlängerung des Rotationskörpers 442 einen äußeren Randbereich auf, der mit einem keilförmigen Abschnitt der oberen Wangen 560, 562 zusammenwirkt. In alternativen Ausführungsformen kann auch die Überführung der Klemmvorrichtung von deren Betriebsstellung in deren Freigabestellung gesteuert werden, indem die Position des zweiten Betätigungselements an der Vorschubeinrichtung sensorisch erfasst und die Klemmvorrichtung motorisch oder anderweitig angetrieben von ihrer Betriebsstellung in ihre Freigabestellung bewegt wird.

Gemäß der Erfindung bildet das Verbindungselement also das Bezugselement zwischen der Spule und genauer zwischen dem Clipstrang und der Vorschubeinrichtung, das stets dafür sorgt, dass die axiale, radiale und angulare Lage des Endes des Clipstrangs bezüglich der Clipspulenaufnahme und somit der Clipmaschine, an welcher die Clipspulenaufnahme fest montiert ist genau definiert ist. So ist es möglich, den Clipstrang automatisch einzufädeln, abzuwickeln und dem unteren Verschließwerkzeug 114 zuzuführen, ohne manuell eingreifen zu müssen.

Bei weniger hohem Automatisierungsgrad lässt sich die Erfindung auch dahingehend verwirklichen, dass anstelle der in die Ausnehmung des Clipstrangs eingreifenden Mitnahmeelemente eine oder mehrere Antriebsrollen vorgesehen sind, die an dem Clipstrang reibschlüssig anliegen, wenn sich die Spule in der Betriebsstellung befindet. Bei einer solchen Vorschubeinrichtung kann zumindest die angulare Position des Clipstrangs aufgrund eines möglichen Schlupfs der Antriebsrollen nicht mit der gleichen Sicherheit gewährleistet werden. Diese Ungenauigkeit kann andererseits durch eine sensorische Erfassung des freien Endes des Clipstranges nach dem Bestücken der Aufnahme mit der Spule erfolgen, wenn die Spule also ihre Betriebsstellung eingenommen hat. Der Sensor kann beispielsweise in Form eine Lichtschranke oder dgl. vorzugsweise im Bereich des unteren Clipshebels 110 nahe dem Fördermechanismus 126 bzw. der Matrize 114 angeordnet sein und das freie Ende ermitteln. Die Vorschubsteuerung ist dann eingerichtet, den Clipstrang zunächst mittels der Mitnahmeelemente solange zu verfahren, bis der Sensor ein Signal ausgibt, welches das Ankommen des freien Endes des Clipstranges anzeigt.

In ähnlicher Weise kann bei einem etwas geringeren Automatisierungsgrad anstelle des einen Vorsprung aufweisenden und in die Ausnehmung des Clipstrangs eingreifenden Haltemittels auch eine Bremse an dem Haltemittel vorgesehen sein, die in ihrer Betriebsstellung reibschlüssig an dem Clipstrang anliegt. Auch bei einem solchen alternativen Verbindungselement ist die genaue angulare Position des Endes des Clipstrangs nicht mehr mit der gleichen Präzision bestimmbar, da ein Schlupf der Bremse ebenfalls zu einer Verschiebung des Clipstrangs führen kann. Auch diese Ungenauigkeit kann durch entsprechende Sensorik wiederum kompensiert werden.

Abweichend von dem zum Zweck der Erläuterung der Erfindung dargestellten Ausführungsbeispiel, kann das Mitnahmeelement anstelle einer Rotation eine intermittierend eingreifende Schwenkbewegung ausführen. Auch braucht das Mitnahmeelement gar nicht motorisch angetrieben zu sein sondern lediglich als passiver Klinkenmechanismus eine Sperrwirkung aufweisen, um das Zurückgleiten des Clipstranges aus dem Verbindungselement zu verhindern. Dann würde der Abzug des Clipstranges von der Spule allein durch einen anderweitigen Antrieb erfolgen, wie beispielsweise durch den Antrieb 126 am unteren Cliphebel 122. Dies hätte allerdings zur Folge, das der Clipstrang zumindest bis zu dem automatischen Antrieb von Hand durchgefädelt werden müsste.

## Patentansprüche

1. Spule (336, 236) für einen Wickel (438) aus einem Ausnehmungen aufweisenden Clipstrang (118) mit einem Spulenkörper (450) und einem um den Spulenkörper (450) drehbar und an dem Spulenkörper (450) unverlierbar angeordneten Verbindungselement (140, 240, 440), welches ein Führungsmittel zum Führen des Clipstranges (118) beim Abwickeln aufweist.

2. Spule (336, 236) nach Anspruch 1,
**dadurch gekennzeichnet, dass** das Führungsmittel eine/ein an den Querschnitt des Clipstranges (118) angepasste(s) Kerbe oder Fenster (541, 542, 543, 544, 545, 546) aufweist.

3. Verbindungselement (140, 240, 440) mit den Merkmalen nach einem der Ansprüche 1 bis 2 zum Einsatz an einer Spule (336, 236) für einen Wickel (138) aus einem Ausnehmungen aufweisenden Clipstrang (118).

4. System (130) zum Abwickeln eines Wickel (138) aus einem Ausnehmungen aufweisenden Clipstrang (118)
mit einer Spule (336, 236), auf der der Clipstrang (118) aufgewickelt ist und die einen Spulenkörper (450) und ein um den Spulenkörper (450) drehbar und an dem Spulenkörper (450) unverlierbar angeordnetes Verbindungselement (140, 240, 440) aufweist, welches Verbindungselement (140, 240, 440) ein Führungsmittel zum Führen des Clipstranges (118) beim Abwickeln aufweist,
mit einer Aufnahme (134), die eine Betriebsstellung für die Spule (336, 236) definiert, in der diese drehbar gelagert ist, und
mit einer der Aufnahme (134) zugeordneten Vorschubeinrichtung (142), die eingerichtet ist, an dem Clipstrang (118) im Bereich des Verbindungselements (140, 240, 440) anzugreifen, wenn sich die Spule (336, 236) in ihrer Betriebsstellung befindet.

5. System (130) nach Anspruch 4,
**dadurch gekennzeichnet, dass** das Führungsmittel eine an den Querschnitt des Clipstranges (118) angepasste Kerbe oder Fenster (541, 542, 543, 544, 545, 546) aufweist.

6. System (130) nach einem der Ansprüche 4 oder 5,
**dadurch gekennzeichnet, dass** die Vorschubeinrichtung (142) ein Mitnahmeelement (444) aufweist, das in eine Ausnehmung des Clipstranges (118) eingreift, wenn sich die Spule (336, 236) in ihrer Betriebsstellung befindet.

7. System (130) nach einem der Ansprüche 4 bis 6,
**dadurch gekennzeichnet, dass** das der Spulenkörper (450) wenigstens einen Flansch (452, 454) aufweist, an dem das Verbindungselement (140, 240, 440) angeordnet ist.

8. System (130) nach einem der Ansprüche 4 bis 7,
**dadurch gekennzeichnet, dass** die Aufnahme (134) wenigstens zwei Führungsrollen (332, 333, 334) aufweist, die in der Betriebsstellung der Spule (336, 236) an dieser umfänglich anliegen.

9. Clipmaschine (100) mit einer Aufnahme (134) und einer Vorschubeinrichtung (142) mit den Merkmalen nach einem der Ansprüche 4 bis 8.

10. Clipmaschine (100) nach Anspruch 9,
**gekennzeichnet durch** eine Clipmaschinensteuerung, die mit der Vorschubsteuerung verbunden und eingerichtet ist, ein Clipvorschub-Steuersignal an die Vorschubeinrichtung (142) auszugeben, wobei die Vorschubeinrichtung (142) eingerichtet ist, bei Erhalt des Clipvorschub-Steuersignals den Motor der Vorschubeinrichtung (142) in Abzugsrichtung des Clipstranges (118) anzutreiben.

## Claims

1. A reel (336, 236) for a winding (438) comprising a clip line (118) having openings, comprising a reel body (450) and a connecting element (140, 240, 440) which is arranged rotatably about the reel body (450) and captively on the reel body (450) and which has a guide means for guiding the clip line (118) in the unwinding operation.

2. A reel (336, 236) according to claim 1 **characterised in that** the guide means has a notch or window (541, 542, 543, 544, 545, 546) adapted to the cross-section of the clip line (118).

3. A connecting element (140, 240, 440) having the features according to one of claims 1 and 2 for use on a reel (336, 236) for a winding (138) comprising a clip line (118) having openings.

4. A system (130) for unwinding a winding (138) comprising a clip line (118) having openings, comprising
a reel (336, 236) on which the clip line (118) is wound and which has a reel body (450) and a connecting element (140, 240, 440) which is arranged rotatably about the reel body (450) and captively on the reel body (450), which connecting element (140, 240, 440) has a guide means for guiding the clip line (118) in the unwinding operation,
a receiving means (134) which defines an operating position for the reel (336, 236) in which it is rotatably supported, and
an advance device (142) which is associated with the receiving means (134) and which is adapted to engage the clip line (118) in the region of the connecting element (140, 240, 440) when the reel (336, 236) is in its operating position.

5. A system (130) according to claim 4 **characterised in that** the guide means has a notch or window (541, 542, 543, 544, 545, 546) adapted to the cross-section of the clip line (118).

6. A system (130) according to one of claims 4 and 5 **characterised in that** the advance device (142) has an entrainment element (444) which engages into an opening in the clip line (118) when the reel (336, 236) is in its operating position.

7. A system (130) according to one of claims 4 to 6 **characterised in that** the reel body (450) has at least one flange (452, 454) on which the connecting element (140, 240, 440) is arranged.

8. A system (130) according to one of claims 1 to 7 **characterised in that** the receiving means (134) has at least two guide rollers (332, 333, 334) which bear peripherally against the reel (336, 236) in the operating position thereof.

9. A clipping machine (100) comprising a receiving means (134) and an advance device (142) having the features according to one of claims 4 to 8.

10. A clipping machine (100) according to claim 9 **characterised by** a clipping machine control which is connected to the advance control and which is adapted to output a clip advance control signal to the advance device (142), wherein the advance device (142) is adapted to drive the motor of the advance device (142) in the draw-off direction of the clip line (118) when the clip advance control signal is received.

## Revendications

1. Bobine (336, 236) pour un enroulement (438) constitué d'une branche d'agrafage (118) présentant des évidements ayant un corps de bobine (450) et un élément de liaison (140, 240, 440) monté de façon rotative autour du corps de bobine (450) et de façon imperdable sur le corps de bobine (450), et ayant un moyen de guidage pour le guidage de la branche d'agrafage (118) lors de l'enroulement.

2. Bobine (336, 236) selon la revendication 1,
**caractérisée en ce que** le moyen de guidage a une entaille ou une fenêtre (541, 542, 543, 544, 545, 546) adaptée à la section transversale de la branche d'agrafage (118).

3. Elément de liaison (140, 240, 440) ayant les caractéristiques selon l'une quelconque des revendications 1 à 2 pour une utilisation sur une bobine (336, 236) pour un enroulement (138) constitué d'une branche d'agrafage (118) ayant des évidements.

4. Système (130) pour le déroulement d'un enroulement (138) constitué d'une branche d'agrafage (118) ayant des évidements comprenant
une bobine (336, 236), sur laquelle la branche d'agrafage (118) est enroulée et qui a un corps de bobine (450) et un élément de liaison (140, 240, 440) monté de façon rotative autour du corps de bobine (450) et de façon imperdable sur le corps de bobine (450), lequel élément de liaison (140, 240, 440) a un moyen de guidage pour le guidage de la branche d'agrafage (118) lors du déroulement,
un logement (134), qui définit une position de service pour la bobine (336, 236) dans laquelle celle-ci est montée de façon rotative, et
un dispositif d'avancement (142) attribué au logement (134), qui est aménagé pour attaquer la branche d'agrafage (118) dans la zone de l'élément de liaison (140, 240, 440), lorsque la bobine (336, 236) se trouve dans sa position de service.

5. Système (130) selon la revendication 4,
**caractérisé en ce que** le moyen de guidage présente une entaille ou une fenêtre (541, 542, 543, 544, 545, 546) adaptée à la section de la branche d'agrafage (118).

6. Système (130) selon l'une quelconque des revendications 4 ou 5,
**caractérisé en ce que** le dispositif d'avancement (142) a un élément d'entraînement (444) qui pénètre dans un évidement de la branche d'agrafage (118) lorsque la bobine (336, 236) se trouve dans sa position de service.

7. Système (130) selon l'une quelconque des revendications 4 à 6,
**caractérisé en ce que** le corps de bobine (450) a au moins une bride (452, 454) sur laquelle l'élément de liaison (140, 240, 440) est disposé.

8. Système (130) selon l'une quelconque des revendications 4 à 7
**caractérisé en ce que** le logement (134) a deux galets de guidage (332, 333, 334) qui, lorsque la bobine (336, 236) est dans la position de service, s'appliquent sur le pourtour sur celle-ci.

9. Agrafeuse (100) comprenant un logement (134) et un dispositif d'avancement (142) ayant les caractéristiques selon l'une quelconque des revendications 4 à 8.

10. Agrafeuse (100) selon la revendication 9,
**caractérisée par** une commande d'agrafeuse, qui est reliée à la commande d'avancement et est aménagée pour délivrer un signal de commande d'avancement d'agrafage au dispositif d'avancement (142), le dispositif d'avancement (142) étant aménagé pour entraîner le moteur du dispositif d'avancement (142) dans le sens d'extraction de la branche d'agrafage (118) lorsque le signal de commande d'avancement d'agrafage est reçu.
